Europäisches Patentamt

European Patent Office

Office européen des brevets

(19)

(11) Publication number: **0 030 577**
B1

# EUROPEAN PATENT SPECIFICATION

(45) Date of publication of patent specification: **21.03.84**

(51) Int. Cl.³: **B 29 D 11/00, G 02 C 7/04**

(21) Application number: **79302906.7**

(22) Date of filing: **14.12.79**

(54) Method for marking an optical element.

(43) Date of publication of application:
**24.06.81 Bulletin 81/25**

(45) Publication of the grant of the patent:
**21.03.84 Bulletin 84/12**

(84) Designated Contracting States:
**BE DE FR GB IT LU NL SE**

(56) References cited:
FR - A - 1 370 642
FR - A - 1 400 566
FR - A - 2 355 642
FR - A - 2 373 582
FR - A - 2 406 217
US - A - 4 108 827

(73) Proprietor: **Kabushiki Kaisha Hoya Lens**
**Kowada 25-banchi, Itsukaichimachi**
**Nishitamagun, Tokyo (JP)**

(72) Inventor: **Tarumi, Niro**
**26-2-406 Senju Hinode-cho Adachi-ku**
**Tokyo (JP)**
Inventor: **Tsuchiya, Makoto**
**Otsu 132-1, Sekimachi 1-chome Nerima-ku**
**Tokyo (JP)**
Inventor: **Sasaki, Kunio**
**1050 Itsukaichi, Itsukaichimachi Nishitamagun**
**Tokyo (JP)**

(74) Representative: **Harrison, David Christopher et al,**
**MEWBURN ELLIS & CO 2/3 Cursitor Street**
**London EC4A 1BQ (GB)**

Courier Press, Leamington Spa, England.

Method for marking an optical element

The invention relates to a method for marking an optical element.

The optical elements hereinafter referred to are made of plastics material of which polymethylmethacrylate, polystyrene polycarbonate, cellulose-acetate, polydiethyleneglycolbisallylcarbonate (CR—39) and others are examples. Lenses made of such materials are widely used because of their excellent characteristics such as shock, heat and solvent resistance and their light weight.

However such methods may be ineffective or have a high cost and require a long time to carry out. They may involve engarving of the lens, the presence of a mark which alters its optical qualities or spoils its appearance, and in some cases is easily removable with damage to the lens.

US—A—4,108,827 discloses the incorporation of a material into a lens which imparts a faint but distinct ultraviolet activated fluorescence to the lens. While this allows identification based on the presence or absence of this fluorescence, it does not permit anything more than this single distinction.

FR—A—2,406,217 discloses the application of a fluorescent mark to a lens by vapourising an optical blueing agent and allowing it to sublime on parts of the lens through a mask. This permits the marking of the lens with a factory marking or an indication of strength, but the method is inevitably somewhat inconvenient to perform.

The present invention as claimed, is intended to provide a solution to such drawbacks. It solves the problem of the mark spoiling the appearance and effectiveness of the optical element and that of the mark being easily removed. This is acheived by the printing of a mark on the lens with a solution of fluorescent material in accordance with the method of claim 1. The mark is only visible under ultra-violet light. The organic solvent of claim 1 is preferably an alcohol, e.g. methanol, ethanol, isopropanol or benzylalcohol.

The advantages offered by the invention are several. Under normal conditions the marking is invisible and thus does not spoil the appearance or effectiveness of the optical element marked. Unlike the ink applied by prior art printing methods where the dried ink protrudes above the lens surface, the marking material used in the present method does not protrude above the lens surface and is not removed by solvents other than those which would also solvate the lens material. The method may be performed very simply, e.g. with the use of a porous rubber stamp.

A preferred embodiment of the invention is described in detail below with reference to the accompanying drawings in which:

Figure 1 is a transmission rate/wavelength graph at ultra-violet and visible wavelengths wherein the curves for two lenses of CR—39 plastics material one with and one without any fluorescent dye-stuff incorporated are represented by a dashed and a solid line.

Figure 2 shows a lens printed according to the Example and viewed under (a) sunlight and (b) ultra-violet light.

Printing a fluorescent mark on optical elements provides a convenient method of affixing reference numbers to the optical elements for example, the diopter of a lens to the lens itself. Printing methods in the prior art involve printing on lenses using a non-watersoluble ink which results in the ink protruding a certain height above the lens surface and in it being easily dissolved by an organic solvent.

In the preferred embodiment of the invention the fluorescent dye is dissolved in alcohol. The fluorescent dye-stuff concentration is 0.5—10% by weight and the fluorescent dye-stuff and solvent are chosen to ensure complete dissolution of the fluorescent dye-stuff. Alcohols such as methanol, ethanol, isopropanol, benzylalcohol etc. can be used though isopropanol is preferred due to the solvency of the dye in it and its rate of evaporation. It is also preferable to add 10% by weight of glycerin to the alcohol as this lowers its rate of evaporation. It is also possible to use any other solvent provided the fluorescent dye-stuff will dissolve in it and that it does not adversely affect the plastics material. The fluorescent marking material thus prepared is absorbed on a porous rubber stamp which is then pressed onto the optical element surface to be printed. Only such pressing makes the ink remain on the optical elements surface. The optical element is then dried in a dryer at 60—90°C for 1 to 10 minutes and preferably at about 80°C to encourage to absorption of the fluorescent dye-stuff into the lens. The dried material does not project from the surface of the lens. The markings on a lens so marked will only be visible under ultra-violet light and will not be removed by wiping the lens with water or an organic solvent (other than one which dissolves the optical element plastics material itself).

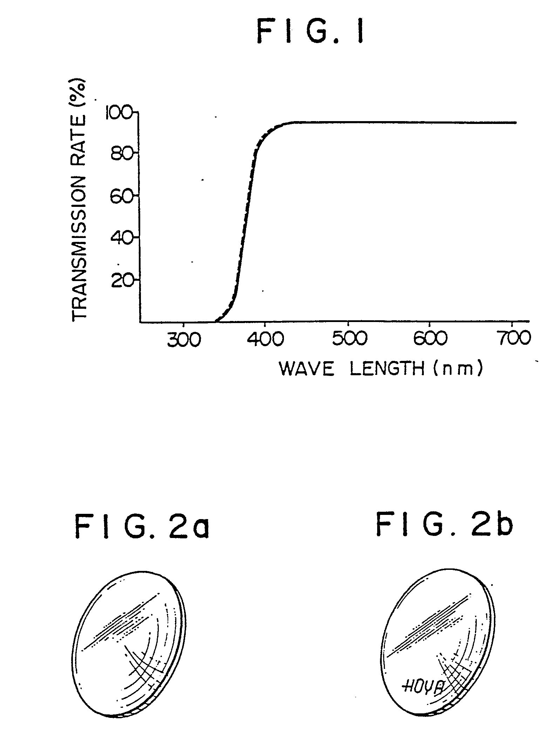

Figure 1 shows the transmission rate curve for ultra-violet and visible light for an untreated lens and for one which was made from a plastics material with a fluorescent material incorporated in it (solid and dashed lines). As can be seen, the addition of the fluorescent dye-stuff does not substantially affect the ultra-violet or visible portion of the transmission rate curve for the lens.

The following example is given in order to illustrate the invention.

Example

The fluorescent dye-stuff White Fluor B or White Fluor PCS (sold by Sumitomo Chemical Co.) is dissolved in isopropanol and glycerin is added. The solution is then homogenized. The solution is absorbed onto a porous rubber stamp and this is pressed onto a lens made of CR—39 plastics material. The lens is then dried at 80°C for 5 minutes and then cleaned with acetone. On viewing in sunlight the lens appears as in Figure 2a, and on viewing under ultra-violet light it appears as in Figure 2b.

Lenses provided with markings by the above mentioned method embodying the invention are thus easily distinguished from lenses from other sources. Care (such as cleaning) of the lenses without damaging the marks presents little problem.

White Fluor B and White Fluor PCS are organic fluorescent materials, White Fluor B is a coumarine derivative and White Fluor PCS is an oxazol derivative.

## Claims

1. A method of making a mark visible only in ultraviolet light on an optical element of plastics material, characterised by the steps of:

(a) printing the mark on the surface of the optical element with a solution of a fluorescent material in the range of 0.5% to 10% by weight of the solution, the solvent of the solution being an organic solvent, and thereafter

(b) drying the printed mark at 60°C to 90°C for 1 to 10 minutes.

2. A method as claimed in Claim 1, wherein said solvent is methanol, ethanol, isopropanol, or benzyl-alcohol.

3. A method as claimed in Claim 1 or Claim 2 wherein about 10% by weight of glycerin is present in the solution.

4. A method according to any one of Claims 1 to 3 in which step (a) is carried out by the use of a rubber stamp.

## Revendications

1. Procédé pour produire, sur un élément optique en matière plastique, une marque visible uniquement sous la lumière ultraviolette, caractérisé par les dispositions qui consistent:

a) à imprimer la marque sur la surface de l'élément optique à l'aide d'une solution d'une matière fluorescente dans une proportion de 0,5% à 10% en poids de la solution, le solvant de la solution étant un solvant organique, et ensuite

b) à sécher la marque imprimée entre 60°C et 90°C pendant 1 à 10 minutes.

2. Procédé suivant la revendication 1, caractérisé en ce que le solvant est le méthanol, l'éthanol, l'isopropanol ou l'alcool benzylique.

3. Procédé suivant la revendication 1 ou 2, caractérisé en ce que la solution contient environ 10% en poids de glycérine.

4. Procédé suivant une quelconque des revendications 1 à 3, caractérisé en ce que la disposition (a) est mise en oeuvre en utilisant un tampon en caoutchouc.

## Patentansprüche

1. Verfahren zum Anbringen einer nur bei ultraviolettem Licht sichtbaren Markierung auf einem optischen Element aus Kunststoff, gekennzeichnet durch folgende Schritte:

(a) Aufdrucken der Markierung auf die Oberfläche des optischen Elementes mit einer Lösung aus einem fluoreszierenden Material in der Größenordnung von 0,5 bis 10 Gew.-% der Lösung, wobei das Lösungsmittel der Lösung ein organisches Lösungsmittel ist, und sodann.

(b) Trocknen der aufgedruckten Markierung bei 60 bis 90°C für 1 bis 10 Minuten.

2. Verfahren nach Anspruch 1, wobei das Lösungsmittel Methanol, Äthanol, Isopropanol oder Benzylalkohol ist.

3. Verfahren nach Anspruch 1 oder 2, wobei ungefähr 10 Gew.-% glycerin in der Lösung vorhanden sind.

4. Verfahren nach einem der Ansprüche 1 bis 3, wobei der Schritt (a) durch Verwendung eines Gummistempels ausgeführt wird.

# F I G. I

# F I G. 2a

# F I G. 2b